# FASCICULE DE BREVET EUROPEEN

(11) **EP 2 909 488 B1**
(45) Date de publication et mention de la délivrance du brevet: **13.09.2017**
(21) Numéro de dépôt: 13776835.4
(22) Date de dépôt: 16.10.2013
(51) Int. Cl.: F16B 13/06, A63B 29/02

(54) **DISPOSITIF D'ANCRAGE AMOVIBLE UTILISABLE EN TANT QUE GOUJON DE SUSPENSION**
ABNEHMBARE VERANKERUNGSVORRICHTUNG ZUR VERWENDUNG ALS AUFHÄNGUNGSSTIFT
REMOVABLE ANCHORING DEVICE USABLE AS A SUSPENSION PIN

(30) Priorité: 16.10.2012 FR 1259862
(43) Date de publication de la demande: 26.08.2015
(73) Titulaire: Zedel, 38920 Crolles (FR)
(72) Inventeur: CABRIT, Eric, 12260 Foissac (FR); CLUZON, Paul, 31160 Cazaunous (FR)
(74) Mandataire: Hecké, Gérard
(86) Numéro de dépôt international: PCT/EP2013/071638
(87) Numéro de publication internationale: WO 2014/060481

(56) Documents cités:
- EP-A1- 2 243 970
- US-A- 4 506 924
- US-B2- 6 729 821

## Description

### DOMAINE TECHNIQUE GENERAL ET ART ANTERIEUR

La présente invention concerne le domaine des matériels utilisés tant pour l'escalade que pour suspendre ou fixer des objets à une paroi rocheuse ou en béton ou autre et concerne plus particulièrement un goujon amovible d'ancrage. L'invention concerne également le domaine du levage de charges lourdes (poutre, bloc béton, etc.).

On connaît de l'état de la technique des dispositifs d'ancrage prévu pour être ancrés dans des forages réalisés dans des matériaux pleins constitués par de la roche ou du béton. Certains de ces dispositifs présentent l'inconvénient de n'être utilisable qu'une seule fois et de ne pouvoir être retirés après utilisation. Par ailleurs, ils ne peuvent être posés qu'à l'aide d'outils de vissage et sont de ce fait difficilement utilisables dans le domaine de l'escalade, du levage de charge ou chaque fois qu'il s'agit de laisser une paroi sans dispositif.

On connaît aussi de l'état de la technique des dispositifs d'ancrage amovibles, du genre goujons, utilisables pour suspendre des objets à des parois. L'intérêt de tels dispositifs est de pouvoir être aisément retirés des forages qui les accueillent pour être placés dans d'autres forages.

De tels dispositifs sont notamment connus du brevet US 3 861 636 et de la demande de brevet FR 2 411 328.

On connaît aussi de la demande de brevet WO 97/32631 un dispositif d'ancrage amovible d'escalade pouvant être retiré de la paroi après usage.

On connaît aussi du brevet US 6 729 821 un ancrage à câble, pour escalade, difficile à retirer de la paroi lorsqu'il a été fortement sollicité.

Typiquement, les dispositifs d'ancrage amovible du genre goujon sont prévus pour être engagés chacun dans un perçage pratiqué dans la paroi à équiper et sont constitués chacun par un corps femelle radialement expansible dans le perçage, recevant en coulissement axial un corps mâle sous forme de tige cylindrique dotée en extrémité distale d'une tête d'expansion de forme tronconique assujettie, par déplacement de la tige, à pénétrer dans le corps femelle afin de le dilater. Le déplacement axial relatif du corps mâle en vue de dilater le corps femelle résulte de l'action d'un organe élastique, enfilé sur le corps mâle et monté en compression entre le corps femelle et un épaulement de l'extrémité proximale du corps mâle. Sous l'effet de son expansion, le corps femelle est appliqué contre la face du perçage, ce qui réalise une liaison par adhérence et assure le maintien du goujon dans le perçage. Pour dégager le goujon, l'utilisateur applique un effort axial sur le corps mâle afin que sa tête soit dégagée au moins en partie du corps femelle. De cette manière, la liaison par obstacle se trouve rompue et le goujon peut alors être séparé de la paroi.

Habituellement, le corps mâle est équipé pour recevoir des charges, et doit posséder pour cette raison une section suffisamment importante pour résister aux contraintes mécaniques générées par ces dernières.

La tige constitutive du corps mâle des dispositifs antérieurs, en raison de la conception de ces derniers, présente un diamètre nettement inférieur à celui du perçage à pratiquer dans la paroi. Pour cette raison, compte tenu de la contrainte de diamètre imposée pour la tige, le corps femelle et le perçage se trouvent de ce fait surdimensionnés. De plus pour éviter que la tige sous l'effet de la charge n'adopte une position oblique dans le perçage, le corps femelle doit être suffisamment long pour présenter en arrière de sa zone soumise à expansion, une portée d'appui assurant la coaxialité de la tige et du perçage.

### PRESENTATION GENERALE DE L'INVENTION

La présente invention a pour objet de pallier les inconvénients précédemment cités en proposant un dispositif de fixation amovible du genre décrit précédemment, conçu de manière à ce que le diamètre de la tige puisse correspondre, au jeu fonctionnel près au diamètre du perçage, tout en étant d'une conception simplifiée.

L'invention concerne un dispositif amovible d'ancrage prévu pour être inséré dans un forage pratiqué dans une paroi, et prévu pour supporter une charge mécanique, comprenant :
- un corps femelle doté d'une zone avant radialement expansible, prévue pour être introduite dans le forage et d'une butée arrière prévue pour être à l'extérieur du forage,
- un corps mâle engagé en coulissement dans le corps femelle comportant en extrémité avant une tête d'expansion, apte à pénétrer, par déplacement axial du corps femelle et du corps mâle l'un par rapport à l'autre, dans la zone radialement expansible du corps femelle afin de la dilater et l'appliquer contre la face cylindrique du forage, ledit corps mâle comportant une butée arrière prévue pour être à l'extérieur du forage,
- un organe élastique de compression engagé sur le corps mâle et monté en compression entre la butée du corps femelle et la butée du corps mâle, afin de solliciter le corps mâle et le corps femelle dans le sens de l'engagement de la tête d'expansion dans la zone radialement expansible.

L'invention est remarquable en ce que le corps mâle, en avant et à écartement de la butée arrière que comporte le corps femelle, présente un organe d'arrêt déterminant une longueur de pénétration dans le forage.

L'organe d'arrêt détermine une longueur minimale d'introduction permettant une fixation particulièrement sûre du dispositif dans la paroi. De plus, une telle disposition, après insertion du dispositif dans le forage de la paroi, permet de maintenir un écart suffisant entre la paroi et la butée du corps femelle afin que cette dernière puisse être utilisée en tant que prise digitale pour la manoeuvre du corps femelle sur la tige. En outre, l'organe élastique de compression assure un verrouillage instantané du dispositif dans le forage pratiqué dans la paroi. Ce dispositif présente l'avantage de pouvoir être mis en place et retiré rapidement d'une seule main.

De manière préférée, l'organe d'arrêt est prévu pour recevoir ou bloquer un élément de suspension de la charge. Ainsi, contrairement à l'art antérieur où la liaison à la charge est réalisée au niveau d'une butée à distance de la paroi, l'invention permet de réaliser une liaison au plus près de la paroi, ce qui limite le porte-à-faux du dispositif d'ancrage, ce qui améliore sa robustesse et sa durée de vie. Ainsi, à charge égale, le dispositif d'ancrage peut être introduit dans un forage de diamètre moindre.

De manière préférée, l'organe d'arrêt est un collet, de préférence, fileté.

De manière préférée, l'organe d'arrêt est constitué par la partie avant d'une anse fixée rigidement à la tige constitutive de l'organe mâle, ou articulée à cette dernière, ladite anse constituant un moyen de suspension de la charge. Ainsi, un élément en forme de crochet peut être relié rapidement et de manière pratique à ladite anse.

Selon un aspect préféré, le corps mâle, sous forme de tige cylindrique, immédiatement en arrière de la tête d'expansion comprend un rétrécissement sur lequel est montée la partie expansible du corps femelle. De préférence, le rétrécissement est cylindrique.

De préférence, le corps mâle comprenant au moins une saignée longitudinale, le corps femelle entre la zone radialement expansible et la butée arrière comprend au moins une tringle de manoeuvre et de guidage engagée en coulissement dans la saignée longitudinale. Ainsi, le déplacement longitudinal du corps mâle par rapport au corps femelle est guidé.

De préférence encore, la partie de chaque tringle de manoeuvre engagée en coulissement dans la saignée correspondante est noyée dans ladite saignée afin d'éviter toute surépaisseur radiale.

Selon un aspect préféré, le corps mâle comprenant un rétrécissement sur lequel est montée la partie expansible du corps femelle, la saignée longitudinale débouche dans ledit rétrécissement du corps mâle.

De préférence, le corps mâle comprenant au moins deux saignées longitudinales diamétralement opposées, le corps femelle entre la zone radialement expansible et la butée arrière comprend au moins deux tringles de manoeuvre engagées en coulissement dans les saignées longitudinales. De préférence, l'organe d'arrêt est traversé de part en part par les saignées.

Selon un aspect préféré, la partie du corps mâle prévue pour pénétrer dans le forage présente un diamètre supérieur ou égal au plus grand diamètre de la tête d'expansion et au plus grand diamètre de la zone radialement expansible du corps femelle.

De préférence, la butée arrière du corps mâle est disposée en arrière et à écartement de la butée arrière du corps femelle.

De manière préférée, la butée arrière du corps femelle comporte un perçage traversant dans lequel est engagé de manière librement coulissante le corps mâle.

De préférence, le volume interne délimité par la zone radialement expansible du corps femelle est tronconique afin d'épouser la forme tronconique de la tête d'expansion pour transmettre l'effort de dilatation de manière uniforme.

L'invention sera mieux comprise à la lecture de la description qui va suivre, donnée uniquement à titre d'exemple, et se référant aux dessins annexés sur lesquels :
- la figure 1 est une vue en perspective d'un dispositif selon l'invention, dans un état actif,
- la figure 2 est une vue en perspective d'un dispositif selon l'invention dans un état inactif,
- la figure 3 est une vue en perspective d'un corps mâle du dispositif selon l'invention,
- la figure 4 est une vue en perspective d'un corps femelle du dispositif selon l'invention, et
- la figure 5 montre un dispositif engagé en blocage dans un forage.

### DESCRIPTION D'UN OU PLUSIEURS MODES DE REALISATION ET DE MISE EN OEUVRE

Tel que représenté, le dispositif d'ancrage amovible selon l'invention, du genre goujon pour l'escalade est prévu pour être engagé de manière amovible dans un forage F préalablement pratiqué dans une paroi P afin d'y être encastré. Ce dispositif d'ancrage est prévu pour supporter une charge mécanique. Cette charge mécanique est principalement appliquée sur le dispositif d'ancrage de manière radiale et engendre des contraintes mécaniques en flexion.

Le dispositif d'ancrage selon l'invention comprend d'une part un corps femelle 1 doté d'une zone avant 10, élastique, radialement expansible, et d'autre part un corps mâle 2, substantiellement sous forme de tige cylindrique, engagé en coulissement dans le corps femelle 1.

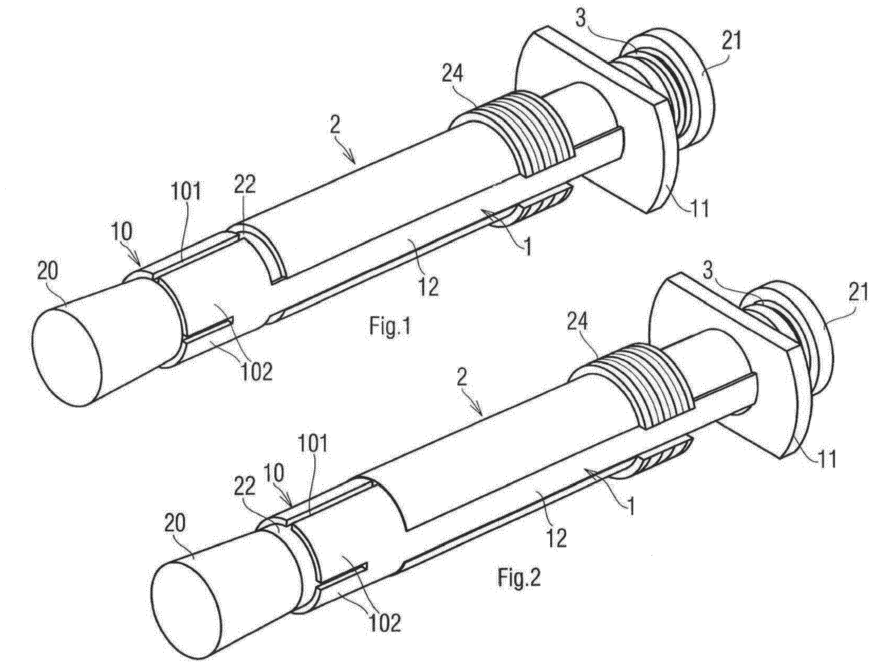

En référence aux figures 1 et 2, ce corps mâle 2 comporte en extrémité avant une tête d'expansion 20 sollicitée vers et dans la zone expansible 10 du corps femelle 1 par un organe élastique 3 engagé sur le corps mâle 2 et monté en compression entre une butée arrière 11 du corps femelle 1 et une butée arrière 21 du corps mâle 2, la butée arrière 21 du corps mâle 2 étant disposée en arrière et à écartement de la butée arrière 11 du corps femelle 1. La pénétration de la tête d'expansion 20 dans la zone expansible 10 conduit à la dilation radiale de cette dernière. Par dilation radiale, la partie expansible 10 du corps femelle 1 est fermement appliquée contre la surface cylindrique du forage F afin d'assurer, par adhérence, l'immobilisation axiale, du dispositif d'ancrage dans la paroi P qui l'accueille.

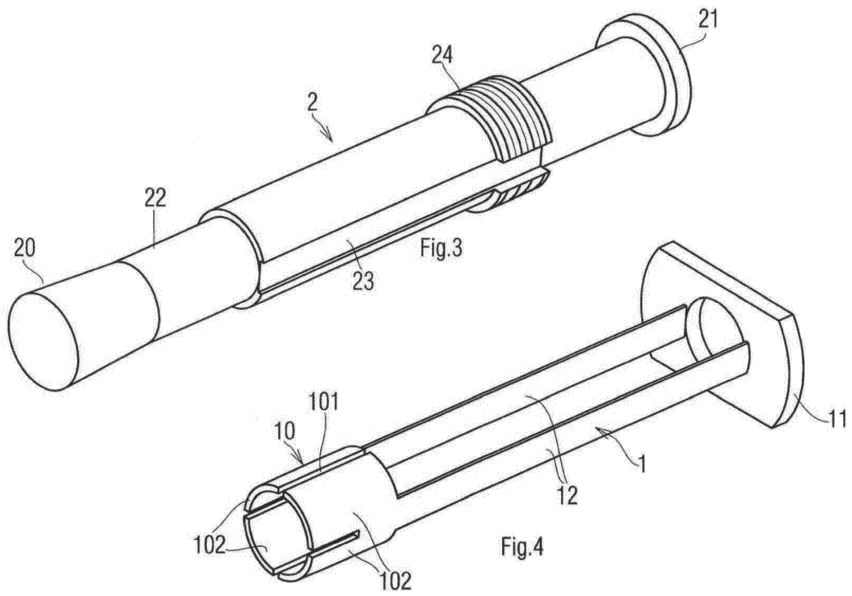

Comme représenté à la figure 4, le corps femelle 1, réalisé en métal ou en matière plastique ou synthétique ayant les caractéristiques d'élasticité et d'adhérence voulues, comprend entre la zone radialement expansible 10 et la butée arrière 11 deux tringles 12 de manoeuvre et de guidage.

Ces tringles de manoeuvre 12, rigidement fixées tant à la zone expansible 10 qu'à la butée arrière 11, lient l'une à l'autre ces dernières et sont destinées à transmettre à la zone expansible 10 des efforts de poussée axiaux, appliqués sur la butée arrière 11 par l'organe élastique de compression 3. Elles permettent aussi de transmettre à la zone expansible 10 des efforts de retrait. Autrement dit, les tringles de manoeuvre 12 permettent de communiquer tout déplacement axial de la butée arrière 11 à la zone expansible 10.

Toujours en référence à la figure 4, la zone radialement expansible 10 du corps femelle 1 se présente sous la forme d'une bague cylindrique fendue. Cette bague présente selon un plan géométrique diamétral deux fentes opposées 101 divisant ladite bague en deux mâchoires 102 dont une est fixée en extrémité de l'une des tringles de manoeuvre 12 et l'autre, en extrémité de l'autre tringle de manoeuvre 12.

Avantageusement, chaque mâchoire 102, selon un plan diamétral de la zone expansible 10, pourra être dotée d'une fente médiane, traversante dans le sens de l'épaisseur et débouchante en extrémité.

De telles dispositions accroissent la possibilité de déformation de la zone radialement expansible 10 et des mâchoires 102 sous l'effet de l'action de la tête d'expansion 20, et par voie de conséquence, la faculté de ces dernières à épouser complètement la forme du forage F de la paroi P. On utilise ainsi toute la surface externe des deux mâchoires 102 pour assurer le contact avec le forage F de la paroi P et, par voie de conséquence, on optimise l'importance des forces d'adhérence.

Dans la forme préférée de réalisation, en référence à la figure 4, la butée arrière 11 du corps femelle 1 comporte un perçage traversant central dans lequel est engagé de manière librement coulissante le corps mâle 2 comme représenté aux figures 1 et 2. Cette butée arrière 11 épouse sensiblement un contour rectangulaire et constitue avantageusement une prise digitale pour la manoeuvre du dispositif d'ancrage de sa position active vers sa position inactive.

Pour manoeuvrer le dispositif d'ancrage entre sa position active, dite d'ancrage, et sa position inactive, dite de libération, l'écartement entre la butée arrière 11 du corps femelle 1 et la butée 21 du corps mâle 2 est modifiée par action de l'utilisateur sur la butée arrière 11 qui remplit une fonction de prise digitale, à la manière d'une seringue.

Selon la position active, dite d'ancrage, du dispositif d'ancrage, en référence à la figure 1, la zone radialement expansible 10 du corps femelle 1 est dilatée par la tête d'expansion 20 du corps mâle 2. Selon la position inactive, dite de libération, la zone radialement expansible 10 du corps femelle 1 se trouve située en retrait axial par rapport à la tête d'expansion 20 du corps mâle 2 comme illustré à la figure 2.

Il y a lieu de noter que le dispositif d'ancrage, au repos, est normalement actif du fait de l'action de l'organe élastique 3 qui tend à écarter les butées 11, 21. Dans cet état, le dispositif d'ancrage ne peut pas être introduit dans le forage F de la paroi P. En vue de cette introduction, l'utilisateur agit sur la prise digitale, c'est-à-dire la butée arrière 11, pour déplacer axialement le corps femelle 1 sur le corps mâle 2, vers la position inactive, ce déplacement s'effectuant à l'encontre de l'action exercée par l'organe élastique 3.

En référence à la figure 3, la tête d'expansion 20 que comporte le corps mâle 2 est, selon la forme de réalisation préférée, de forme tronconique. Le volume interne délimité par les mâchoires 102 du corps femelle 1, volume prévu pour accueillir la tête d'expansion 20 du corps mâle 2, est de forme cylindrique comme illustré à la figure 4. De manière préférée, le volume interne délimité par la partie expansible 10 du corps femelle 1, en particulier, les mâchoires 102 du corps femelle 1, est de forme tronconique afin d'épouser la forme tronconique de la tête d'expansion 20 pour transmettre l'effort de dilatation de manière uniforme.

En référence à la figure 3, le corps mâle 2, immédiatement en arrière de la tête d'expansion 20, comprend un rétrécissement 22 sur lequel est montée la partie expansible 10 du corps femelle 1 et ce avec possibilité de coulissement axial. Il a été présenté dans cet exemple un rétrécissement 22 de forme cylindrique mais il va de soi que le rétrécissement 22 pourrait être différent, par exemple, conique ou formé de pentes.

De plus, toujours en référence à la figure 3, le corps mâle 2 présente deux saignées longitudinales 23, diamétralement opposées, débouchant dans le rétrécissement cylindrique 22, dans lesquelles sont engagées en coulissement les tringles de manoeuvre 12 du corps mâle 1, la partie de chaque tringle de manoeuvre 12 engagée en coulissement dans la saignée 23 correspondante étant noyée dans ladite saignée 23 comme illustré aux figures 1 et 2. De cette façon, chaque tringle de manoeuvre 12 ne forme aucune surépaisseur sur le corps mâle 2 et se trouve en retrait de l'enveloppe cylindrique que forme ce dernier. Une telle disposition, lorsque notamment le dispositif d'ancrage se trouve disposé dans le forage F de la paroi P, permet le libre coulissement des tringles de manoeuvre 12 dans les saignées longitudinales 23.

De plus la partie du corps mâle 2 prévue pour pénétrer dans le forage F présente un diamètre supérieur ou égal au plus grand diamètre de la tête d'expansion 20 et au plus grand diamètre de la zone radialement expansible 10 du corps femelle 1. Grâce à cette disposition, le diamètre de la partie du corps mâle 2 prévue pour pénétrer dans le forage F et le diamètre de ce forage F pourront être sensiblement identiques de façon à réaliser après blocage, un encastrement mécanique. Un tel type de liaison supprime tous les degrés de liberté de mouvement.

La zone arrière du corps mâle 2 pourra être formée par un rétrécissement cylindrique, le diamètre de ce rétrécissement sera égal à la valeur du diamètre dudit corps mesuré en fond de saignée 23. La zone arrière est avantageusement équipée d'un filetage pour accueillir la butée 21, cette dernière étant alors équipée d'un taraudage axial. Dans une forme pratique de réalisation, cette butée est constituée par un écrou.

Avantageusement, en référence à la figure 3, le corps mâle 2 en avant et à écartement de la butée 11 du corps femelle 1 présente un organe d'arrêt 24. Cet organe d'arrêt 24 est prévu pour être appliqué contre la paroi P autour de l'embouchure du forage F. Cet organe d'arrêt 24 détermine ainsi une longueur d'enfoncement du dispositif d'ancrage dans le forage F. La valeur de cette longueur obéit à des contraintes de sécurité. Elle est suffisante pour s'opposer efficacement au retrait du dispositif du forage F qui l'accueille ainsi qu'à l'éclatement du matériau sous l'action de la force expansive. Elle est également suffisante pour que le cône d'arrachement que détermine le dispositif d'ancrage soit relativement important.

Avant de placer le dispositif d'ancrage dans le forage F, l'utilisateur rapproche les butées 11, 21 grâce à la prise digitale, ce qui contraint l'organe élastique de compression 3 afin de diminuer l'encombrement radial du dispositif d'ancrage qui peut être ainsi inséré sans encombre dans le forage F.

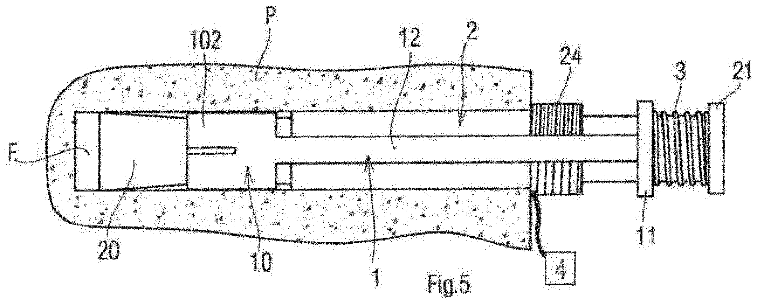

En vue de sa fixation dans le forage F préalablement réalisé, le dispositif d'ancrage est maintenu par l'utilisateur dans sa position inactive et est ensuite engagé dans ledit forage F en appliquant l'organe d'arrêt 24 contre la paroi P. Ensuite l'utilisateur relâche la pression qu'il exerce sur la butée 11, c'est-à-dire sur la prise digitale, de façon que le corps femelle 1 du dispositif d'ancrage, sous l'effet de l'action de l'organe élastique 3, soit repoussé vers l'avant pour assurer le blocage du dispositif d'ancrage dans le forage F. Le déplacement est guidé par les tringles 12 du corps femelle 1 qui coopèrent avec les saignées 23 du corps mâle 2. Suite au déplacement, la tête d'expansion 20 du corps mâle 2 pénètre dans la zone radialement expansible 10 du corps femelle 1 qui se dilate radialement et vient en contact avec la surface cylindrique du forage F pour permettre le blocage du dispositif d'ancrage dans le forage F comme illustré à la figure 5.

Il y a lieu de noter que lors de ce mouvement de blocage, la partie mâle 2 du dispositif d'ancrage est fixe par rapport au forage F, seule la partie femelle 1 est mobile dans le sens de l'engagement dans le forage F. Ainsi le blocage du dispositif d'ancrage, contrairement aux solutions antérieures, n'est pas réalisé par déplacement du corps mâle 2 dans le sens de son extraction du forage réalisé F. Ainsi la longueur du dispositif d'ancrage dans le forage F demeure constante.

L'organe d'arrêt 24 constitue avantageusement un élément de suspension de la charge ou alternativement est équipé d'un tel élément. Par élément de suspension de charge, on entend, par exemple, une anse, un anneau, une plaquette, une platine, etc. A tire d'exemple, une charge 4 est reliée à l'organe d'arrêt 24 comme illustré à la figure 5.

Selon une première forme de réalisation, l'organe d'arrêt 24 est constitué par un collet cylindrique formé sur la tige constitutive du corps mâle 2. Ce collet peut être un élément rapporté sur ladite tige et fixé à cette dernière par tous moyens connus de la personne de l'art. Ce collet cylindrique est traversé de part en part par les deux saignées 23. Ce collet est avantageusement fileté pour recevoir en vissage l'élément de suspension de la charge.

Selon cette forme de réalisation, en référence à la figure 5, la charge 4 est appliquée au plus près de l'encastrement, ce qui minimise grandement les contraintes en flexion.

Selon une autre forme de réalisation, l'organe d'arrêt 24 est constitué par la partie avant d'une anse fixée rigidement à la tige constitutive du corps mâle 2, ou articulée à cette dernière, ladite anse constituant le moyen de suspension de la charge.

A titre d'exemple dans le domaine des équipements de protection individuelle (escalade, spéléologie, travaux en hauteur, etc.), l'utilisateur se suspend au dispositif d'ancrage en fixant une corde à l'organe d'arrêt 24 qui comporte, par exemple, une anse ou une plaquette. A cet effet, la corde comporte un mousqueton adapté pour coopérer avec l'anse ou la plaquette solidaire de l'organe d'arrêt 24. Ainsi, les efforts sont appliqués directement sur l'organe d'arrêt 24 qui est proche de l'embouchure du forage F, ce qui limite le porte-à-faux. Les butées 11, 21 ainsi que l'organe élastique de compression 3 ne sont ainsi pas sollicités lors de l'utilisation, ce qui est avantageux.

En vue du retrait du dispositif d'ancrage, l'utilisateur agit sur les butées 11, 21 dans le sens de leur rapprochement afin de dégager la zone radialement expansive 10 de la tête d'expansion 20 ce qui réduit fortement les forces d'adhérence entre la paroi P et la zone radialement expansible 10 du corps femelle 1.

Enfin il y a lieu de noter que la pose et la dépose du dispositif d'ancrage s'effectue sans outil même si le dispositif a été fortement sollicité contrairement aux solutions existantes.

Il va de soi que la présente invention peut recevoir tous aménagements et variantes du domaine des équivalents techniques sans pour autant sortir du cadre du présent brevet tel que défini par les revendications ci-après.

L'invention trouve une application particulièrement avantageuse dans le domaine du levage de charges lourdes (poutre, bloc béton, etc.).

## Revendications

1. Dispositif amovible d'ancrage prévu pour être inséré dans un forage (F) pratiqué dans une paroi (P), et prévu pour supporter une charge mécanique (4), comprenant:
- un corps femelle (1) doté d'une zone avant (10) radialement expansible, prévue pour être introduite dans le forage (F) et d'une butée arrière (11) prévue pour être à l'extérieur du forage (F),
- un corps mâle (2) engagé en coulissement dans le corps femelle (1) comportant en extrémité avant une tête d'expansion (20), apte à pénétrer, par déplacement axial du corps femelle (1) et du corps mâle (2) l'un par rapport à l'autre, dans la zone radialement expansible (10) du corps femelle (1) afin de la dilater et l'appliquer contre la face cylindrique du forage (F), ledit corps mâle (2) comportant une butée arrière (21) prévue pour être à l'extérieur du forage (F),
- un organe élastique de compression (3) engagé sur le corps mâle (2) et monté en compression entre la butée (11) du corps femelle (10) et la butée (21) du corps mâle (2), afin de solliciter le corps mâle (2) et le corps femelle (1) dans le sens de l'engagement de la tête d'expansion (20) dans la zone radialement expansible (10),
**dispositif caractérisé en ce que** le corps mâle (2), en avant et à écartement de la butée arrière (11) que comporte le corps femelle (1), présente un organe d'arrêt (24) déterminant une longueur de pénétration dans le forage (F).

2. Dispositif selon la revendication précédente, dans lequel l'organe d'arrêt (24) est prévu pour recevoir ou bloquer un élément de suspension de la charge (4).

3. Dispositif selon l'une quelconque des revendications précédentes, dans lequel l'organe d'arrêt (24) est un collet, de préférence, fileté.

4. Dispositif selon l'une quelconque des revendications précédentes, dans lequel l'organe d'arrêt (24) est constitué par la partie avant d'une anse fixée rigidement à la tige constitutive de l'organe mâle (2), ou articulée à cette dernière, ladite anse constituant un moyen de suspension de la charge.

5. Dispositif selon l'une quelconque des revendications précédentes, dans lequel le corps mâle (2), sous forme de tige cylindrique, immédiatement en arrière de la tête d'expansion (20) comprend un rétrécissement (22) sur lequel est montée la partie expansible du corps femelle (1).

6. Dispositif selon la revendication 5, dans lequel le rétrécissement (22) est cylindrique.

7. Dispositif selon l'une quelconque des revendications précédentes, dans lequel, le corps mâle (2) comprenant au moins une saignée longitudinale (23), le corps femelle (1) entre la zone radialement expansible (10) et la butée arrière (11) comprend au moins une tringle de manoeuvre (12) et de guidage engagée en coulissement dans la saignée longitudinale (23).

8. Dispositif selon la revendication 7, dans lequel la partie de chaque tringle de manoeuvre (12), engagée en coulissement dans la saignée correspondante (23), est noyée dans ladite saignée (23).

9. Dispositif selon la revendication précédente, dans lequel, le corps mâle (2) comprenant un rétrécissement (22) sur lequel est montée la partie expansible du corps femelle (1), la saignée longitudinale (23) débouche dans ledit rétrécissement (22) du corps mâle (2).

10. Dispositif selon l'une des revendications 6 à 9, dans lequel le corps mâle (2) comprenant au moins deux saignées longitudinales (23) diamétralement opposées, le corps femelle (1) entre la zone radialement expansible (10) et la butée arrière (11) comprend au moins deux tringles de manoeuvre (12) engagées en coulissement dans les saignées longitudinales (23).

11. Dispositif selon la revendication 10, dans lequel l'organe d'arrêt (24) est traversé de part en part par les saignées (23).

12. Dispositif selon l'une quelconque des revendications précédentes, dans lequel la partie du corps mâle (2) prévue pour pénétrer dans le forage (F) présente un diamètre supérieur ou égal au plus grand diamètre de la tête d'expansion (20) et au plus grand diamètre de la zone radialement expansible (10) du corps femelle (1).

13. Dispositif selon l'une quelconque des revendications précédentes, dans lequel la butée arrière (21) du corps mâle (2) est disposée en arrière et à écartement de la butée arrière (11) du corps femelle (1).

14. Dispositif selon l'une quelconque des revendications précédentes, dans lequel la butée arrière (11) du corps femelle (1) comporte un perçage traversant dans lequel est engagé de manière librement coulissante le corps mâle (2).

15. Dispositif selon l'une quelconque des revendications précédentes, dans lequel le volume interne délimité par la zone radialement expansible (10) du corps femelle (1) est tronconique.

## Patentansprüche

1. Abnehmbare Verankerungsvorrichtung, die vorgesehen ist, in eine in einer Wand (P) vorgesehene Bohrung (F) geführt zu werden und eine mechanische Last (4) zu tragen, und umfasst:
- einen Aufnahmekörper (1), der mit einem vorderen Bereich (10) versehen ist, der radial aufweitbar und vorgesehen ist, in die Bohrung (F) geführt zu werden, sowie einen hinteren Anschlag (11), der vorgesehen ist, sich außerhalb der Bohrung (F) zu befinden,
- einen Einsteckkörper (2), der gleitend in den Aufnahmekörper (1) eingesteckt wird und am vorderen Ende einen Aufweitungskopf (20) umfasst, der geeignet ist, durch axiale Bewegung des Aufnahmekörpers (1) und des Einsteckkörpers (2) zueinander in den radial aufweitbaren Bereich (10) des Aufnahmekörpers einzudringen, um diesen zu weiten und ihn gegen die zylindrische Seite der Bohrung (F) zu drücken, welcher Einsteckkörper (2) einen hinteren Anschlag (21) umfasst, der vorgesehen ist, sich außerhalb der Bohrung (F) zu befinden,
- ein auf den Einsteckkörper (2) gestecktes elastisches Kompressionselement (3), das komprimierbar zwischen dem Anschlag 11) des Aufnahmekörpers (10) und dem Anschlag (21) des Einsteckkörpers (2) montiert ist, um den Einsteckkörper (2) und den Aufnahmekörper (1) in Richtung auf das Einführen des Aufweitungskopfes (20) in den radial aufweitbaren Bereich (10) zu ziehen,
**Vorrichtung, die dadurch gekennzeichnet ist, dass** der Einsteckkörper (2) vorne und mit Abstand zum hinteren Anschlag (11) des Aufnahmekörpers (1) ein Stoppelement (24) aufweist, das eine Eindringlänge in die Bohrung (F) definiert.

2. Vorrichtung nach dem vorstehenden Anspruch, bei der das Stoppelement (24) ein Aufhängungselement der Last (4) aufnehmen oder blockieren soll.

3. Vorrichtung nach einem der vorstehenden Ansprüche, bei der das Stoppelement (24) eine vorzugsweise gewindete Manschette ist.

4. Vorrichtung nach einem der vorstehenden Ansprüche, bei der das Stoppelement (24) vom vorderen Teil eines Bügels gebildet wird, der starr an dem Schaft befestigt ist, der den Einsteckkörper (2) bildet, oder an dieses angelenkt ist, welcher Bügel ein Mittel zur Aufhängung der Last bildet.

5. Vorrichtung nach einem der vorstehenden Ansprüche, bei der der Einsteckkörper (2) in Form eines zylindrischen Schafts direkt hinter dem Aufweitungskopf (20) eine Verengung (22) aufweist, an die der aufweitbare Teil des Aufnahmekörpers (1) montiert ist.

6. Vorrichtung nach Anspruch 5, bei der die Verengung (22) zylindrisch ist.

7. Vorrichtung nach einem der vorstehenden Ansprüche, bei der, nachdem der Einsteckkörper (2) mindestens einen Längsschlitz (23) aufweist, der Aufnahmekörper (1) zwischen dem radial aufweitbaren Bereich (10) und dem hinteren Anschlag (11) mindestens eine Betätigungs- und Führungsstange (12) aufweist, die gleitend in den Längsschlitz (23) eingeführt wird.

8. Vorrichtung nach Anspruch 7, bei der der Bereich jeder Betätigungsstange (12), der gleitend in den entsprechenden Schlitz (23) eingeführt ist, in diesem Schlitz (23) versenkt ist.

9. Vorrichtung nach dem vorstehenden Anspruch, bei der, nachdem der Einsteckkörper (2) eine Verengung (22) umfasst, an die der aufweitbare Teil des Aufnahmekörpers (1) montiert ist, der Längsschlitz (23) in dieser Verengung (22) des Einsteckkörpers (2) mündet.

10. Vorrichtung nach einem der Ansprüche 6 bis 9, bei der, nachdem der Einsteckkörper (2) mindestens zwei diametral gegenüberliegende Längsschlitze (23) umfasst, der Aufnahmekörper (1) zwischen dem radial aufweitbaren Bereich (10) und dem hinteren Anschlag (11) mindestens zwei Betätigungsstangen (12) umfasst, die gleitend in die Längsschlitze (23) eingeführt sind.

11. Vorrichtung nach Anspruch 10, bei der das Stoppelement (24) ganz von den Schlitzen (23) durchzogen ist.

12. Vorrichtung nach einem der vorstehenden Ansprüche, bei der der Teil des Einsteckkörpers (2), der vorgesehen ist, in die Bohrung (F) einzudringen, einen Durchmesser aufweist, der größer als der größte Durchmesser des Aufweitungskopfes (20) oder gleich diesem und als der größte Durchmesser des radial aufweitbaren Bereichs (10) des Aufnahmekörpers (1) ist.

13. Vorrichtung nach einem der vorstehenden Ansprüche, bei der der hintere Anschlag (21) des Einsteckkörpers (2) hinten und mit Abstand zum vorderen Anschlag (11) des Aufnahmekörpers (1) angeordnet ist.

14. Vorrichtung nach einem der vorstehenden Ansprüche, bei der der hintere Anschlag (11) des Aufnahmekörpers (1) eine durchgehende Bohrung umfasst, in die frei gleitend der Einsteckkörper (2) geführt ist.

15. Vorrichtung nach einem der vorstehenden Ansprüche, bei der der von dem radial aufweitbaren Bereich (10) des Aufnahmekörpers (1) gebildete Innenraum kegelstumpfförmig ist.

## Claims

1. A removable anchoring device designed to be inserted in a hole (F) drilled in a wall (P) and intended to support a mechanical load (4), comprising:
- a female body (1) provided with a radially expandable front area (10), designed to be inserted in the drilled hole (F), and with a rear stop (11) designed to be outside the hole (F),
- a male body (2) engaged by sliding in the female body (1) comprising at its front end an expansion head (20) designed to penetrate, by axial movement of the female body (1) and of the male body (2) with respect to one another, into the radially expandable area (10) of the female body (1) in order to dilate it and to apply it against the cylindrical surface of the hole (F), said male body (2) comprising a rear stop (21) designed to be outside the hole (F),
- a flexible compression part (3) engaged on the male body (2) and fitted in compression between the stop (11) of the female body (10) and the stop (21) of the male body (2), in order to bias the male body (2) and the female body (1) in the direction of engagement of the expansion head (20) in the radially expandable area (10),
**a device characterized in that** the male body (2), in front of and away from the rear stop (11) which the female body (1) comprises, presents a stop part (24) determining a penetration length into the drilled hole (F).

2. The device according to the foregoing claim, wherein the stop part (24) is designed to receive or to block suspension means of the load (4).

3. The device according to any one of the foregoing claims, wherein the stop part (24) is a ferrule, which is preferably threaded.

4. The device according to any one of the foregoing claims, wherein the stop part (24) is formed by the front part of a shackle rigidly fixed to the shank constituting the male part (2), or articulated on the latter, said shackle constituting a load suspension means.

5. The device according to any one of the foregoing claims, wherein the male body (2), in the form of a cylindrical shank, comprises a narrowed section (22), immediately to the rear of the expansion head (20), on which the expandable part of the female body (1) is fitted.

6. The device according to claim 5, wherein the narrowed section (22) is cylindrical.

7. The device according to any one of the foregoing claims, wherein, the male body (2) comprising at least one longitudinal groove (23), the female body (1) between the radially expandable area (10) and the rear stop (11) comprises at least one handling and guiding strip (12) slidingly engaged in the longitudinal groove (23).

8. The device according to claim 7, wherein the part of each handling strip (12) slidingly engaged in the corresponding groove (23) is sunk in said groove (23).

9. The device according to the foregoing claim, wherein, the male body (2) comprising a narrowed section (22) on which the expandable part of the female body (1) is fitted, the longitudinal groove (23) opens into said narrowed section (22) of the male body (2).

10. The device according to one of claims 6 to 9, wherein the male body (2) comprising at least two diametrically opposite longitudinal grooves (23), the female body (1) comprises at least two handling strips (12) slidingly engaged in the longitudinal grooves (23), between the radially expandable area (10) and the rear stop (11).

11. The device according to claim 10, wherein the grooves (23) pass through the stop part (24) from one side to the other.

12. The device according to any one of the foregoing claims, wherein the part of the male body (2) designed to penetrate into the drilled hole (F) presents a diameter that is greater than or equal to the largest diameter of the expansion head (20) and to the largest diameter of the radially expandable area (10) of the female body(1).

13. The device according to any one of the foregoing claims, wherein the rear stop (21) of the male body (2) is arranged to the rear of and away from the rear stop (11) of the female body (1).

14. The device according to any one of the foregoing claims, wherein the rear stop (11) of the female body (1) comprises a pass-through hole in which the male body (2) is engaged in freely sliding manner.

15. The device according to any one of the foregoing claims, wherein the internal volume delineated by the radially expandable area (10) of the female body (1) is frustum-shaped.
